# EUROPEAN PATENT SPECIFICATION

(11) **EP 2 000 110 B1**
(45) Date of publication and mention of the grant of the patent: **28.08.2013**
(21) Application number: 07739483.1
(22) Date of filing: 23.03.2007
(51) Int. Cl.: A61C 7/08, A61C 7/00

(54) **DENTITION CORRECTING DEVICE**
GEBISSKORREKTURVORRICHTUNG
DISPOSITIF ORTHODONTIQUE

(30) Priority: 28.03.2006 JP 2006089431; 28.03.2006 JP 2006089439; 27.11.2006 JP 2006318378
(43) Date of publication of application: 10.12.2008
(73) Proprietor: Panasonic Corporation, Osaka 571-8501 (JP)
(72) Inventor: YAMAMOTO, Teruko, Okayama-shi, Okayama 700-0082 (JP); KAMIOKA, Hiroshi, Kurashiki-shi, Okayama 710-0057 (JP); ADACHI, Taiji, Kyoto-shi, Kyoto 604-8086 (JP); FUKUSHIMA, Shogo, Kadoma-shi, Osaka 571-8686 (JP); SAKIMURA, Takumi, Kadoma-shi, Osaka 571-8686 (JP)
(74) Representative: Müller-Boré & Partner Patentanwälte
(86) International application number: PCT/JP2007/056042
(87) International publication number: WO 2007/116656

(56) References cited:
- WO-A-2005/092234
- DE-A1- 19 844 628
- FR-A1- 2 872 406
- JP-A- 2006 500 114
- US-A- 4 229 165
- US-A- 4 348 178
- US-A- 4 448 735
- US-A- 5 967 784
- US-A1- 2005 048 433
- US-A1- 2005 244 768

## Description

### TECHNICAL FIELD

The present invention relates to an orthodontic appliance.

### BACKGROUND ART

WO 2005/092234 A1 discloses an orthodontic mouthpiece -for moving one or more teeth to a desired set of positions. The appliance includes force inducing means, which provide a motive force for inducing movement including translations along and rotations about the three orthogonal axes of a Cartesian co-ordinate system to the respective teeth. Also, the appliance may include inflatable means provided with a variable pressure, e.g. such that periodic pulses providing a pulsating force to the teeth. Further, the amplitude and frequency of the pulsations may also be suitably controlled.

US 5,967,784 discloses a dental patient hand held vibrating device having an interdental mouthpiece portion for insertion into a mouth for gripping between the teeth of the dental patient The hand held device comprises a housing containing a battery and a switch for selectively operating a motor with an off centre weight attached to the motor rotating shaft for creating a high frequency vibration that vibrates the entire device. The vibration is transferred from the body of the device to the interdental mouth piece held between the teeth of the patient.

An orthodontic appliance equipped with an orthodontic wire to be mounted on teeth has been conventionally known. An elastic restoring force of the orthodontic wire acts as a constant static load on the teeth to correct teeth malalignment or crossbite. In other words, the orthodontic appliance is based on the principle of aligning the teeth by gradually deforming an alveolar bone supporting the teeth in the gum (bone reconstruction, bone remodeling) through the application of a constant force to the teeth.

However, the teeth alignment using the orthodontic wire takes a very long time (fastest six months, normally several years) until an orthodontic treatment is finished. Such a long treatment period increases burdens on patients, causing them to give up easily.

In order to shorten a period of such an orthodontic treatment, technology of giving a vibration force to the teeth has been studied. For example, a study result to the effect that if a sample in which a constant force was applied to the teeth and a sample in which a vibration force was applied to the teeth are compared, the sample to which the vibration force was applied is more effective in shortening the period is disclosed in Non-Patent Literature 1. Similarly, a study result to the effect that if a sample in which a constant force was applied to the teeth and a sample in which a constant force and a vibration force were applied to the teeth are compared, the sample to which the constant force and vibration force were applied is more effective in shortening the period is disclosed in Non-Patent Literature 2.

According to these studies, the application of the vibration force to the teeth remarkably shortens the period of orthodontic treatment to about 1/2 to 1/3 as compared to conventional technologies. Further, it is sufficient to apply a vibration force only for 1.5 hours a day according to the former literature and only for 2 minutes at a time and once every two weeks according to the latter literature.

It can be understood from these studies that the teeth alignment by applying a vibration force as well as a constant force to the teeth is more effective in remarkably shortening the period of orthodontic treatment than the teeth alignment only by applying a constant force to the teeth using an orthodontic wire or the like.

Appliances for putting the above studies to practical use have been conventionally proposed. Specifically, Patent Literature 1 discloses an appliance provided with a dental mouthpiece to be mounted on teeth so as to urge movements of teeth to be aligned, and means for applying ultrasonic vibration to tissues at and around a mounted position of the dental mouthpiece. Further, Patent Literature 2 discloses an appliance for applying ultrasonic vibration to teeth to be aligned.

However, the appliances disclosed in the above Patent Literatures 1, 2 have a problem that ultrasonic vibration cannot be efficiently applied to the teeth to be aligned since both of them receive the application of ultrasonic vibration from the outside, for example, by pressing an ultrasonic head against the cheek skin. Further, since the respective appliances require an ultrasonic generator, there is also a problem that treatment cannot be continued unless a patient goes to a dental clinic equipped with these appliances.
[Non-Patent Literature 1]Shimizu: "Journal of Japan Orthodontic Society" 45, pp. 56-72, 1986
[Non-Patent Literature 2] Ohmae et al.: "Journal of Japan Orthodontic Society" 60(4), p. 201, 2001
[Patent Literature 1] Japanese Unexamined Patent Publication No. 2002-102255
[Patent Literature 2] Japanese Unexamined Patent Publication No. 2004-201895

### DISCLOSURE OF THE INVENTION

In order to solve the above problems, an object of the present invention is to provide an orthodontic appliance which can align teeth within a shorter period of time than usual without using braces including an orthodontic wire and brackets.

In order to solve the above problems, an orthodontic appliance according to the present invention is disclosed in the appended claims. The dental mouthpiece is so shaped as to apply a biasing force in an aligning direction to the tooth to be aligned while being mounted on the teeth. The vibrating element is attached to the dental mouthpiece, generates mechanical vibration and applies the vibration to the tooth to be aligned, thereby promoting an orthodontic effect.

With this appliance, teeth alignment within a short period of time can be realized only by mounting the dental mouthpiece on the teeth. The shape of the dental mouthpiece mounted on the teeth applies a suitable aligning force, i.e. a static biasing force in the aligning direction to the tooth to be aligned in the teeth and, in addition, the vibrating element attached to the dental mouthpiece applies the vibration to the tooth to be aligned, whereby the alignment of the teeth by the aligning force is promoted to shorten a period of orthodontic treatment.

Thus, according to the present invention, the orthodontic effect can be promoted only by the mounting of the dental mouthpiece and the operation of the vibrating element attached to the dental mouthpiece without using braces including an orthodontic wire and brackets. This dental mouthpiece may be mounted on the teeth only during the operating period of the vibrating element or may be mounted during other periods. If this dental mouthpiece is mounted for a longer period of time, the application period of the above biasing force is extended, thereby further shortening the treatment period.

### BRIEF DESCRIPTION OF THE DRAWINGS

FIG. 1 is a perspective view showing a state where a dental mouthpiece according to a first embodiment of the invention is mounted on the lower dental arch of a user.
FIG. 2 is a section taken along the line II-II of FIG. 1.
FIG. 3 is a perspective view showing an example of an apparatus for producing the dental mouthpiece.
FIG. 4 is a diagram showing an example of a dental mouthpiece producing method using the producing apparatus.
FIG. 5A is a perspective view of a dental mouthpiece according to a second embodiment of the invention, and FIG. 5B is a section taken along the line V-V of FIG. 5A.
FIG. 6 is a section showing a state where a dental mouthpiece according to a third embodiment of the invention is mounted on teeth.
FIG. 7 is a section showing a state where a dental mouthpiece according to a fourth embodiment of the invention is mounted on teeth.
FIG. 8 is a perspective view a state where a dental mouthpiece according to a fifth embodiment of the invention is mounted on teeth.
FIG. 9 is a perspective view a state where a dental mouthpiece according to a sixth embodiment of the invention is mounted on teeth.
FIG. 10 is a perspective view of a dental mouthpiece according to a seventh embodiment of the invention.
FIG. 11 is a perspective view of a dental mouthpiece according to an eighth embodiment of the invention.
FIG. 12 is a perspective view of a dental mouthpiece according to a ninth embodiment of the invention.
FIG. 13 is a perspective view showing a state where a dental mouthpiece according to a tenth embodiment of the invention is mounted on teeth.
FIG. 14 is a perspective view of a dental mouthpiece according to an eleventh embodiment of the invention.
FIG. 15 is a perspective view showing a state where a dental mouthpiece according to a twelfth embodiment of the invention is mounted on the lower dental arch of a user.
FIG. 16 is a section taken along the line XVI-XVI of FIG. 15.

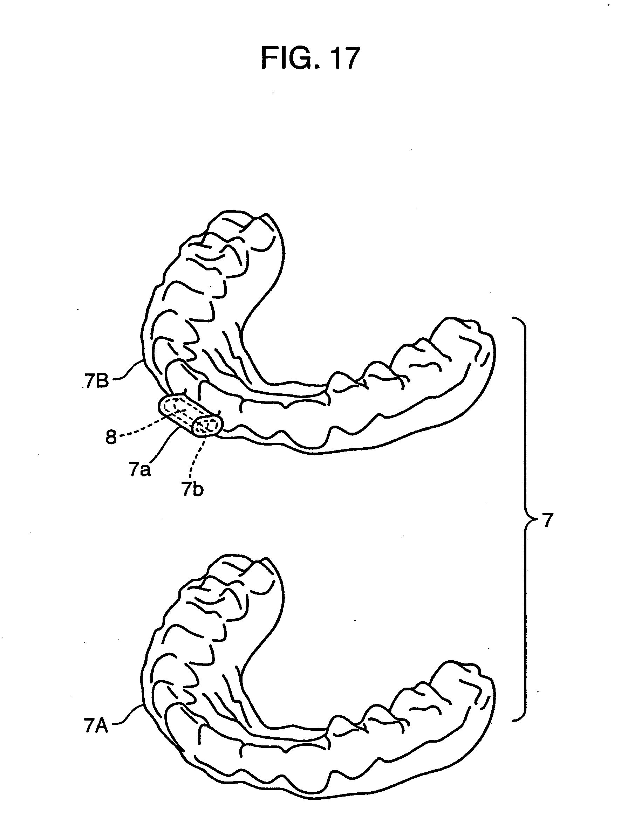

FIG. 17 is an exploded perspective view showing the dental mouthpiece according to the twelfth embodiment of the invention when viewed from topside.
FIGS. 18 are graphs showing an experiment result of the inventors of the invention.
FIG. 19 is a perspective view of an example of a dental mouthpiece similar to the dental mouthpiece according to the twelfth embodiment of the invention, but adopting a different orthodontic method.
FIG. 20 is a perspective view showing a state where a dental mouthpiece according to a thirteenth embodiment of the invention is mounted on a dental cast of a user.
FIG. 21 is a perspective view showing a state where a dental mouthpiece according to a fourteenth embodiment of the invention is mounted on a dental cast of a user.
FIG. 22 is a perspective view showing a state where a dental mouthpiece according to a fifteenth embodiment of the invention is mounted on a dental cast of a user.

### BEST MODES FOR EMBODYING THE INVENTION

Hereinafter, best modes for embodying the present invention are described in detail with reference to the accompanying drawings.

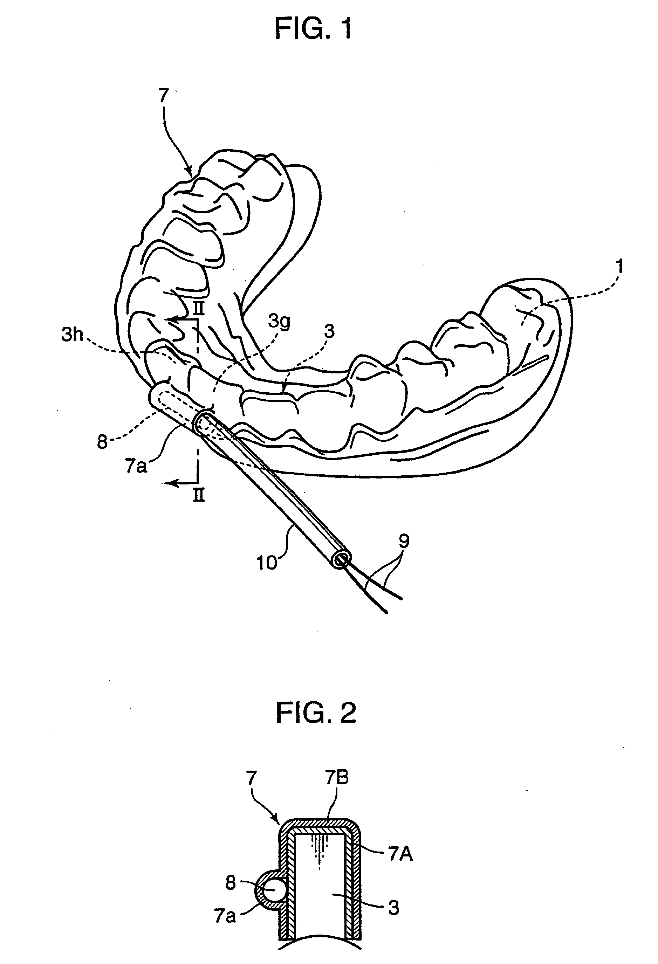

FIG. 1 is a perspective view showing a state where a dental mouthpiece 7 according to a first embodiment of the invention is mounted on the lower dental arch of a user (patient), and FIG. 2 is a section taken along the line II-II of FIG. 1. An orthodontic appliance according to the first embodiment includes the dental mouthpiece 7, and a vibrating actuator 8 as a vibrating element to be attached to the dental mouthpiece 7.

The dental mouthpiece 7 is directly mounted on a teeth group 3 of the user to apply an aligning force to the teeth group 3 by itself without being used together with braces including an orthodontic wire, brackets and the like. This dental mouthpiece 7 is comprised of an inner layer 7A to directly touch the teeth group 3 and an outer layer 7B to be mounted on the outer side of the inner layer 7A as shown in FIG. 2.

A material widely used for mouthpieces (or mouth guards) and having guaranteed hygienic safety is used for the inner layer 7A and the outer layer 7B. It is particularly preferable to use a material having elasticity to permit the dental mouthpiece to deform to such a degree that this dental mouthpiece is mountable on the teeth. For example, the use of an EVA (ethylene vinyl acetate) sheet, which is a polymer material, is preferable since it enables satisfactory joining and can suppress the side effects on teeth and gums or gingival tissues such as allergy.

The material of the inner layer 7A and the outer layer 7B is not limited to the above EVA sheet. However, this EVA sheet has advantages in addition to the above ones. Specifically, this EVA sheet has good electrically insulating property and heat insulating property. Further, the use of the EVA sheet for the inner layer 7A makes the inner layer 7A soft. This can provide the inner layer 7A with a function of alleviating high-speed components of mechanical vibration transmitted to teeth 3g, 3h to be aligned from the vibrating actuator 8 to be described later, whereby damages of the teeth 3g, 3h to be aligned can be prevented.

The vibrating actuator 8 is built in a part of the dental mouthpiece 7 corresponding to teeth to be aligned (teeth 3g, 3h in the example shown in FIG. 1) in the teeth group 3. Specifically, the vibrating actuator 8 is sealed airtight (sealed to such a degree as to hinder the entrance of moisture) between the inner layer 7A and the outer layer 7B.

More specifically, a bulge portion 7a formed in conformity with the outer shape of the vibrating actuator 8 is formed at a part of the outer layer 7B located at the outer side of the teeth 3g, 3h to be aligned as shown in FIG. 2, and the small-sized and lightweight vibrating actuator 8 is horizontally stored (so that a direction of vibration is substantially normal to the teeth group 3) inside this bulge portion 7a. This vibrating actuator 8 includes a motor and an eccentric weight mounted on a rotary shaft of the motor, and the rotation of this eccentric weight induces mechanical vibration. Vibrating actuators of this type are generally used, for example, as vibrators for mobile phones.

In addition to the motor and the eccentric weight, the vibrating actuator 8 preferably includes a casing for storing them. The presence of this casing prevents the eccentric weight from restraining vibration by directly coming into contact with the inner surface or the like of the bulge portion 7a. This casing may be made of metal or made of a polymer material such as rubber.

Power feed cables 9 for supplying power to the vibrating actuator 8 are drawn airtight to the outside through a through hole (not specifically shown) formed in the bulge portion 7a of the outer layer 7B, and further drawn out of the mouth between the lips. If the motor of the vibrating actuator 8 is a direct-current (DC) motor, the intensity and cycle of the vibration can be adjusted by supplying power from a battery via a switch and a variable resistor. The rotating speed, i.e. vibrating frequency (frequency) is not particularly limited, but is generally preferably several Hz to several hundreds Hz. The vibrating actuator 8 may be an alternating-current (AC) motor. Not only this vibrating actuator 8, but also a control board and the like belonging to the vibrating actuator 8 may be built in the dental mouthpiece 7.

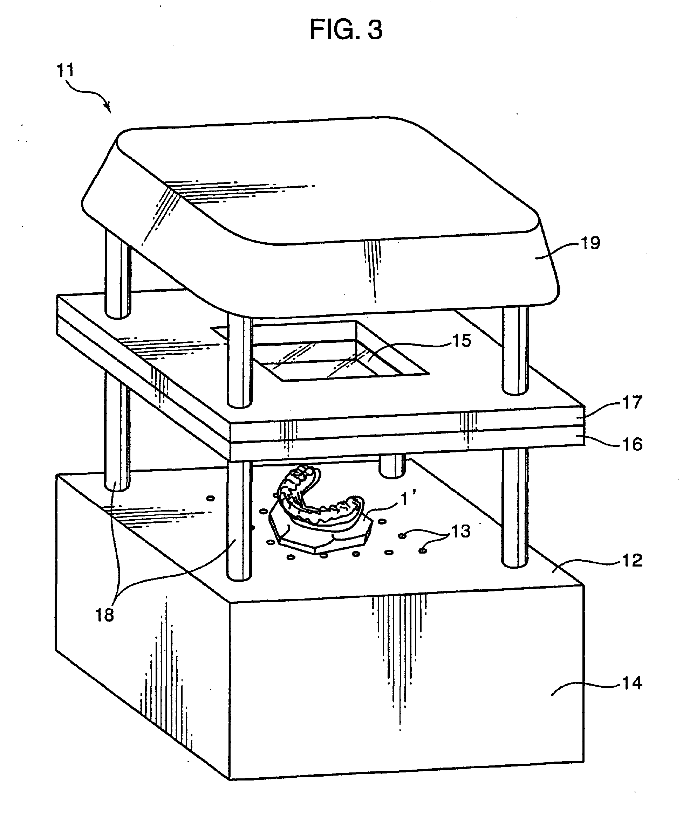

FIG. 3 is a perspective view showing a producing apparatus 11 as one example of an apparatus for producing the dental mouthpiece 7. This producing apparatus 11 is provided with a main body 14, a plurality of supporting columns 18 standing on the main body 14, a pair of sheet fixing devices 16, 17 supported on these supporting columns 18 in such a manner as to be movable upward and downward along the supporting columns 18 and adapted to sandwich an EVA sheet 15 from above and below, and an electric heater 19 mounted on the supporting columns 18. The main body 14 has a stage 12 on which a dental cast 1 can be placed, and has an unillustrated built-in pump for sucking air through a multitude of suction holes 13 formed in the stage 12.

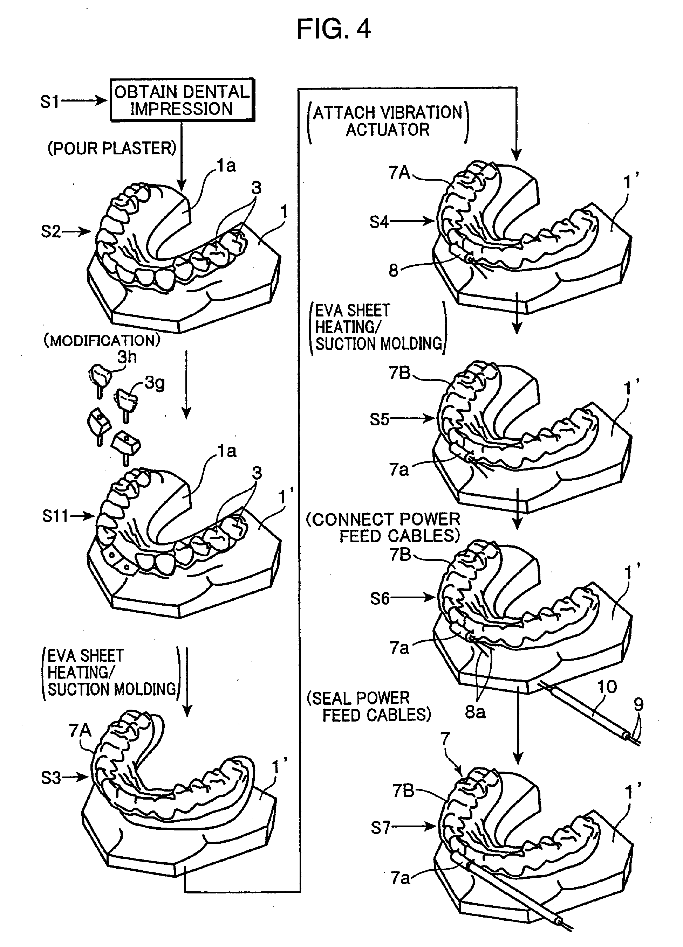

FIG. 4 is a diagram showing an example of a method for producing the dental mouthpiece 7 using the aforementioned producing apparatus 11. In Step S1, dental impression is performed by attaching an impression material to a teeth group 3 of a user at a dental clinic. In Step S2, at a dental technician's laboratory or the like, plaster is poured into the impression material retaining the shape of the teeth and is taken out after being hardened. In this way, the dental cast 1 of the user is completed.

What should be noted is that a dental cast 1' shaped to apply a biasing force in an aligning direction to the teeth 3g, 3h to be aligned is formed by modifying the dental cast 1 in Step S11. In the example of FIG. 4, modification is made by changing the shapes of the teeth 3g, 3h to be aligned from those causing a state of crossbite shown in broken line to those set back (shapes shown by solid line).

Thereafter, the casting of the dental mouthpiece proceeds with the inner layer 7A and the outer layer 7B mounted on the dental cast 1'.

In Step S3, the dental cast 1' is placed on the stage 12 of the producing apparatus 11. On the other hand, the EVA sheet 15 is operated while being sandwiched by the sheet fixing devices 16, 17. Specifically, by the sheet fixing devices 16, 17 being lifted along the supporting columns 18 up to a position near the electric heater 19, the EVA sheet 15 is heated at this position to be softened. After the softening, the EVA sheet 15 is gradually placed on the dental cast 1' by a downward movement of the sheet fixing devices 16, 17. At this time, air suction through the suction holes 13 forms an air flow for closely attaching the EVA sheet 15 to the dental cast 1'. In order to perform this suction more precisely, a cut 1a is made in the dental cast 1'.

This suction enables precise dental impression. The electric heater 19 may also be lowered as the sheet fixing devices 16, 17 are lowered. This downward movement of the electric heater 19 enables continuous heating. Alternatively, the dental mouthpiece can be cast by pressurizing air around the EVA sheet 15. This pressurization and the suction may be applied in combination.

In Step S4, the vibrating actuator 8 is attached to the inner layer 7A while the inner layer 7A is still hot. The material of the dental mouthpiece 7, particularly the above EVA exhibits high viscosity in its molten state to such an extent as to be used as a main ingredient of so-called hot bond. Accordingly, the inner layer 7A having a high temperature in a half molten state immediately after being cast exhibits high viscosity until it is cooled. Thus, the vibrating actuator 8 is temporarily fixed without particularly using fixing means such as adhesive by utilizing an adhesive force given by the material of the inner layer 7A due to the remaining heat of the inner layer 7A. Specifically, it is sufficient to press the vibrating actuator 8 against the inner layer 7A. If the adhesive force by the viscosity of the inner layer 7A is insufficient, such a shortage may be compensated for. For example, the vibrating element such as the vibrating actuator 8 may be provided with a projection and the inner layer 7A may be formed with a part into which the projection is insertable, or the heated EVA may be poured into parts to be fixed as auxiliary adhesive.

In Step S5, an EVA sheet 15 heated as in Step S3 is placed on the inner layer 7A having the vibrating actuator 8 temporarily fixed thereto as described above, and sucked. In this way, the outer layer 7B is formed, and the vibrating actuator 8 is sealed airtight between the outer layer 7B and the inner layer 7A.

The softening temperature of the EVA sheet 15 as the material for the inner layer 7A and the outer layer 7B is set lower than the heat resistant temperature of the vibrating actuator 8. For example, if a vibrating actuator having a heat resistant temperature of 100°C is used as the vibrating actuator 8, an EVA sheet having a softening point of 60 to 70°C is selected as the EVA sheet 15. The use of such an EVA sheet enables the EVA sheet to be directly placed on the vibrating actuator 8 and molten to form the outer layer 7B while securely preventing troubles caused by an excessive temperature rise of the vibrating actuator 8. "Bioplast" (product name) can be cited as an example of the EVA sheet having such a low softening point.

If the heat resistant temperature of the vibrating element 8 is even higher, materials having higher softening points can be used instead of EVA materials. Specifically, polyolefin materials having softening points of about 100°C such as "MG-21" (product name) or PET-E materials having softening points between 100 and 200°C such as "Duran" (product name) can be used.

Although the general dental mouthpiece producing method is introduced here, the appliance according to the present invention may be formed according to another method, e.g. a casting method by laser utilizing a light-curing resin.

After the dental mouthpiece 7 is formed in this way, the EVA constituting a part of the outer layer 7B corresponding to lead wires 8w of the vibrating actuator 8 is stripped off and the power feed cables 9 are connected with the lead wires 8w in Step S6. Thereafter, in Step S7, an end of an EVA tube 110 mounted on the power feed cables 9 is locally heated to seal a connected part with the outer layer 7B airtight, whereby the dental mouthpiece 7 having an inner and outer overlaid structure is completed.

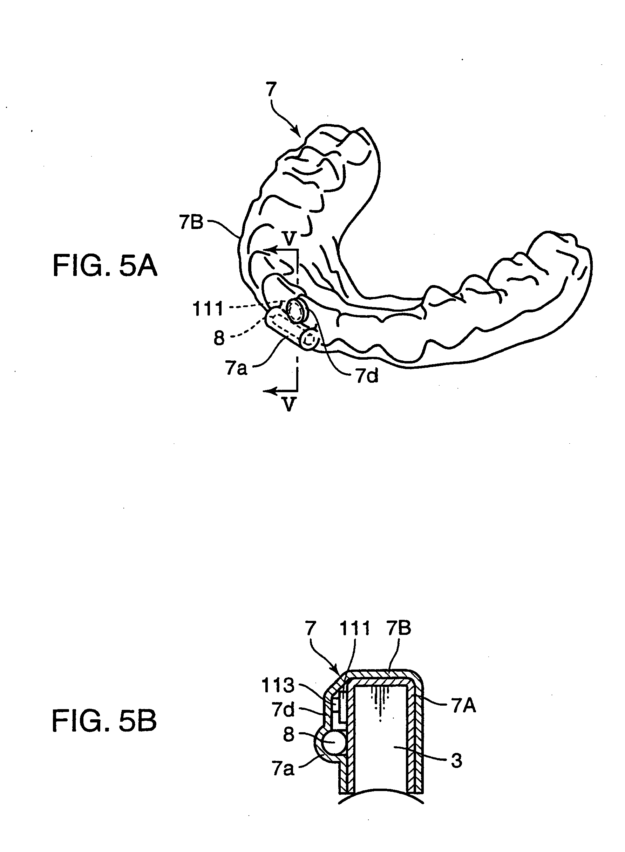

If not only the vibrating actuator 8, but also a drive power source, a control component and the like for the vibrating actuator 8 are stored in this dental mouthpiece 7, it is not necessary to drawn the power feed cables drawn out from the dental mouthpiece 7 out of the mouth between the lips and connect them with an external device (battery, control component or the like). To this end, the power source is preferably small-sized and thin. For example, if the power source for the vibrating actuator 8 is a small-sized button battery 111 as shown in FIGS. 5A and 5B, it is easy to incorporate this button battery 111. In this case, it is also possible to form a bulge portion 7d for the storage of the button battery in the vicinity of the bulge portion 7a formed in the outer layer 7B for the storage of the vibrating actuator and to directly connect the vibrating actuator 8 and the button battery 111 via a power feed cable or the like in the bulge portions 7a, 7d. A switch 113 that is turned on and off through a push-push operation from the outer side of the outer layer 7B may be incorporated into a power feed path.

The vibrating actuator 8, the button battery 111, the switch 113 and the like stored in the dental mouthpiece 7 are preferably insulated from each other. An ordinary insulation process may be applied for this insulation or the insulating property of the material of the dental mouthpiece 7 itself may be utilized, i.e. the dental mouthpiece 7 may be partially used as insulation walls.

It is also possible to store a flexible board forming a control unit in the dental mouthpiece 7. By mounting circuit elements such as a vibrating actuator, a drive power source and a control component therefor on this flexible board, the circuit elements can be more easily built in the dental mouthpiece 7. This mounting enables wiring and coupling with the outside to be omitted, enables the appearance of the appliance to be defined only by the dental mouthpiece, and enables high electrical safety to be ensured by hindering the contact of the power feed cables 9 with the inside of the buccal cavity. An improvement in wearing comfort can also be expected. Further, the practical value of the appliance can be increased by making the appliance portable.

The dental mouthpiece 7 formed as above has an inner surface form capable of applying a biasing force (static load) in an aligning direction to the teeth 3g, 3h to be aligned. This form corresponds to the alignment of the teeth as a final target or a target in the course of the orthodontic treatment. The teeth alignment of the teeth group 3 by the inner surface form is promoted through the application of vibration generated by the vibrating actuator 8.

Accordingly, an aligning force can be applied to the teeth group 3 only by mounting the dental mouthpiece 7 on the teeth group 3 without using braces including an orthodontic wire and brackets. Further, the teeth alignment of the teeth group 3 is promoted by applying vibration to the teeth to be aligned through the operation of the vibrating actuator 8 built in the dental mouthpiece 7 for a specified period, wherefore teeth alignment within a short period of time can be realized. The dental mouthpiece 7 may be mounted on the teeth group 3 only during the operation period of the vibrating actuator 8 or may be mounted during other periods. If this dental mouthpiece 7 is mounted for a longer period of time, it extends a period during which the biasing force is applied to the teeth to be aligned and the period of orthodontic treatment can be further shortened.

The above producing method has an advantage of reducing operation steps since the dental mouthpiece 7 can be fabricated with one dental impression. According to this method, the inner layer 7A is formed using the modified dental cast 1', the actual vibrating actuator 8 is directly attached thereto and the EVA sheet 15 is placed thereon. In this way, the outer layer 7B is formed, and the outer layer 7B and the inner layer 7A are united. Thus, only one dental impression is performed. Contrary to this, a method comprised of a step of performing a dental impression using an impression material with a dummy of the vibrating actuator 8 attached to the completed inner layer 7A, a step of forming a plaster cast again and placing the EVA sheet 15 on this plaster cast to form the outer layer 7B, and a step of melting the inner layer 7A having the actual vibrating actuator 8 attached thereto and the outer layer 7B requires two dental impressions.

Further, the above producing method enables the production of a high-quality dental mouthpiece having high airtightness. Specifically, the inner layer 7A and the EVA sheet for the outer layer 7B softened by being uniformly and entirely heated by the heat of the mounted EVA sheet for the outer layer 7B become half molten to be naturally united. Thus, airtightness is higher, for example, as compared to the case where the inner layer 7A and the outer layer 7B already hardened are bonded to each other. Further, there are no inconveniences in the case of dental impression using a dummy such as problems of forming a clearance between the inner layer 7A and the outer layer 7B and making it impossible to fit the inner layer 7A into the outer layer 7B. This enables the production of a high-quality dental mouthpiece.

It is sufficient for the material of the inner layer 7A and the outer layer 7B to have a softening point lower than the heat resistant temperature of the vibrating actuator 8 and to be harmless to human bodies. This material is arbitrarily selected based on hardness required for the respective layers 7A, 7B after casting within such a range as to meet these conditions.

The use of a soft resin increases moving distances of teeth (e.g. about 1 to 3 mm) by one mounting of a dental mouthpiece. This means that the teeth can be largely moved from the present state by one dental mouthpiece, wherefore the number of dental mouthpieces required for an orthodontic treatment can be reduced. In minor cases, there is a possibility of finishing an orthodontic treatment using only one or two dental mouthpieces. This has a large advantage. For example, an orthodontic wire and brackets normally used for teeth alignment need to be finely adjusted according to a treatment stage. On the contrary, if a hard resin is used, the number of steps during the orthodontic treatment (number of dental mouthpieces having intermediate forms to be fabricated) increases since moving distances of teeth by one mounting of the dental mouthpiece are equal to or shorter than 0.5 mm, which is shorter than the thickness of periodontal membranes.

On the other hand, the use of a hard resin enables the precise application of biasing forces. A dental mouthpiece made of such a hard resin has a smaller degree of deformation upon receiving an external force as compared to the one made of a soft resin. Accordingly, dental mouthpieces made of hard resins are suitable for orthodontic treatments for small parts or for those requiring complex movements of teeth.

The hardness of the material of the dental mouthpiece may be changed depending on cases or treatment stages. For example, a method of using a soft resin at an initial stage of teeth alignment and using a hard resin at a final stage, and a method of using a soft dental mouthpiece only at stages of largely moving the teeth are also effective.

It is also possible to fabricate a dental mouthpiece having both hard parts, i.e. parts for strongly transmitting stimuli to the teeth group 3 and soft parts, i.e. parts for weakly transmitting the stimuli. With this dental mouthpiece, teeth alignment promoting effect by dynamic loads can be differentiated using parts for largely moving the teeth and parts for not largely moving the teeth.

The dental mouthpiece 7 can fulfill its orthodontic effect only by being worn for a short period of about several minutes a day or about several minutes once a week without being worn for a long period of time. Thus, an orthodontic method according to which the dental mouthpiece 7 is worn only for a period during which vibration is applied and dental mouthpieces having no actuators built therein and fabricated by the conventional technology for stagewise teeth alignment are worn during other periods is also effective. Even in this method, the hardness of the dental mouthpiece may be changed depending on cases and treatment stages.

Resins used for the material of the dental mouthpiece are: EVAs → polyolefins → polyesters and the like in a decreasing order of softness. Even the same material has different compound ratios and hardnesses depending on products. Most EVAs are soft materials having a shore hardness of about 80 to 90 and widely used as the material for soft dental mouthpieces. Conversely, polyesters slightly differ depending on compound ratios, but most of them are hard materials and widely used as the material for hard dental mouthpieces. There are soft polyolefins and hard polyolefins depending on their compound ratios, but polyolefins are generally used as materials having hardnesses between the EVAs and the polyesters.

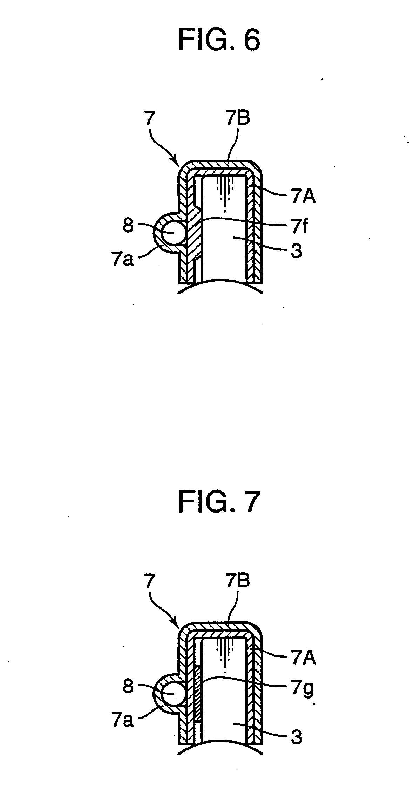

The dental mouthpiece 7 may be formed to have a local projection for applying a constant force (aligning force) to the teeth 3g, 3h to be aligned. For example, in a dental mouthpiece 7 shown as a third embodiment in FIG. 6, a hard projection 7f is formed on the inner surface of the inner layer 7A, and this projection 7f applies a constant aligning force to the teeth 3g, 3h to be aligned by pressing the teeth 3g, 3h to be aligned inward from the outer side. Further, in a dental mouthpiece 7 shown as a fourth embodiment in FIG. 7, a projection is formed by bonding a hard bulging sheet 7g to the inner surface of the inner layer 7A, and the bulging sheet 7g forming this projection presses the teeth 3g, 3h to be aligned, thereby applying a constant aligning force to the teeth 3g, 3h to be aligned. The positions of the projection 7f and the bulging sheet 7g, of course, differ if the teeth to be aligned differ.

In an appliance in which an outer layer 7B is directly mounted on the teeth group 3, it is possible to integrally cast a hard projection on the inner surface of the outer layer 7B or to bond a hard bulging sheet to this inner surface. Further, in a dental mouthpiece in which an inner layer 7A is locally mounted only in a specific area including teeth to be aligned, a constant force (aligning force) can also be applied to the teeth 3g, 3h to be aligned by a pressing force of this inner layer 7A if the inner layer 7A itself is hard.

The vibrating element according to the present invention is not limited to the electric motor. This vibrating element may be a linear motor having a movable element that reciprocally vibrates. Besides, other actuators such as solenoids and voice coil motors can also be used.

The vibrating element may also be a permanent magnet. This permanent magnet can generate mechanical vibration by a magnetic field formed by magnetic field generating means outside the dental mouthpiece 7. This magnetic field can be, for example, generated by a ring-shaped magnetic field generating coil arranged outside the dental mouthpiece 7.

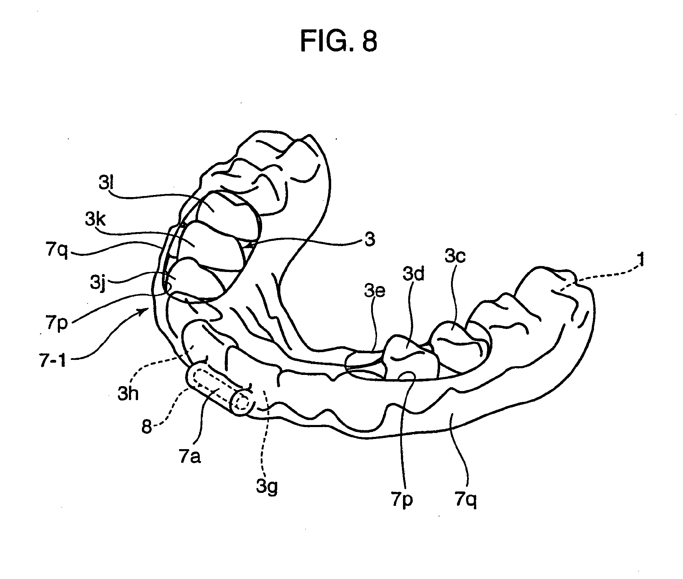

Next, dental mouthpieces according to fifth to eleventh embodiments are described with reference to FIGS. 8 to 14. Each of the dental mouthpieces according to these embodiments has dividing portions by dividing specified parts other than a part corresponding to teeth 3g, 3h to be aligned. These dividing portions suppress the transmission of mechanical vibration generated by a vibrating element so that the mechanical vibration acts restrictedly on the teeth 3g, 3h to be aligned.

FIG. 8 shows a dental mouthpiece 7-1 according to the fifth embodiment. The dividing portions of this dental mouthpiece 7-1 are cutout portions 7p. These cutout portions 7p are formed by cutting out tooth crown portions of the dental mouthpiece 7-1 except at the part corresponding to the teeth 3g, 3h to be aligned. For example, elliptical cutouts are made in the tooth crown portions for teeth 3c to 3e, 3j to 31 in FIG. 8. Tooth root portions 7q left in the dental mouthpiece 7-1 at the parts where the cutout portions 7p are formed integrally connect parts before and after the cutout portions 7p.

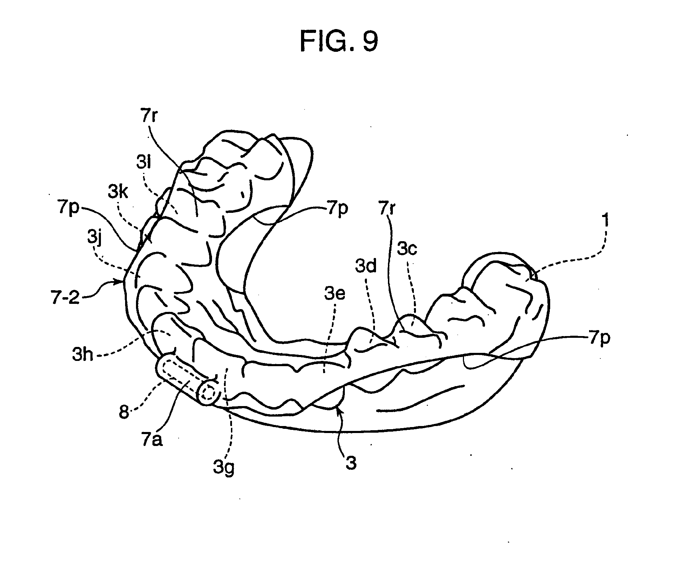

FIG. 9 shows a dental mouthpiece 7-2 according to the sixth embodiment. The dividing portions of this dental mouthpiece 7-2 are also cutout portions 7p. These cutout portions 7p are formed by cutting out tooth root portions of the dental mouthpiece 7-2 except at the part corresponding to the teeth 3g, 3h to be aligned. For example, elliptical cutouts are made in the tooth root portions for the teeth 3c to 3e, 3j to 31 in FIG. 9. Tooth crown portions 7r left in the dental mouthpiece 7-2 at the parts where the cutout portions 7p are formed integrally connect parts before and after the cutout portions 7p.

In the dental mouthpieces 7-1, 7-2, the vibrating actuator 8 for generating mechanical vibration is stored at the part corresponding to the teeth 3g, 3h to be aligned, and the cutout portions (dividing portions) 7p for suppressing the transmission of the mechanical vibration are formed in the parts other than the one corresponding to the teeth 3g, 3h to be aligned. This enables the partial and precise application of vibration to the teeth 3g, 3h to be aligned.

The cutout portions 7p are formed by a post-processing of, e.g. cutting off the tooth crown portions or the tooth root portions of the dental mouthpiece 7 shown in FIG. 1 using a cutter knife or the like. Accordingly, the dental mouthpieces 7-1, 7-2 having these cutout portions 7p can be easily produced. For example, a dental mouthpiece having the above cutout portions 7p can be easily produced through this post-processing from a dental mouthpiece actually worn by a user.

By connecting the parts before and after the cutout portions 7p by the tooth root portions 7q or the tooth crown portions 7r left in the dental mouthpieces 7-1, 7-2, the shapes of the dental mouthpieces 7-1, 7-2 can be so kept as to be entirely mountable on the teeth group 3. Such shapes facilitate an operation of mounting the dental mouthpieces 7-1, 7-2 on the teeth group 3, thereby enabling the vibrating actuator 8 to be precisely positioned at the part corresponding to the teeth 3g, 3h to be aligned in the worn state.

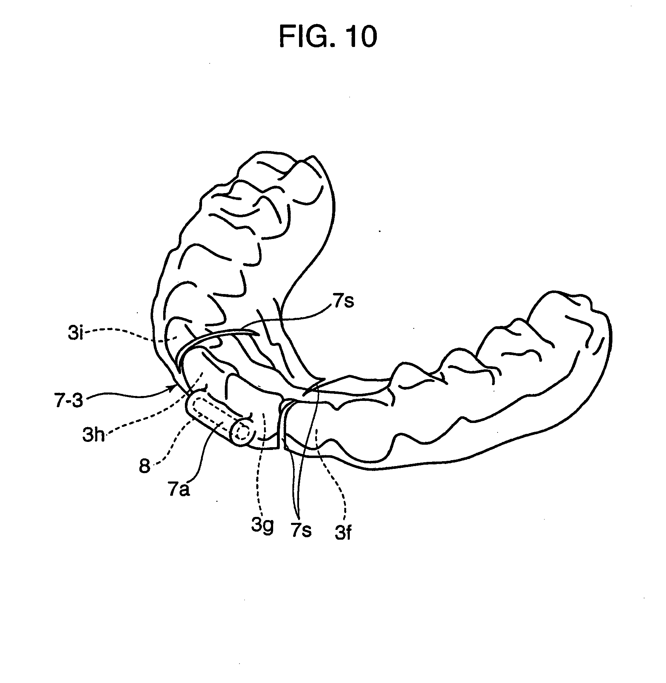

FIG. 10 shows a dental mouthpiece 7-3 according to the seventh embodiment. The dividing portions of this dental mouthpiece 7-2 are slit portions 7s formed in parts of the dental mouthpiece 7-3 except a part corresponding to the teeth 3g, 3h to be aligned. These slit portions 7s are formed in parts between the teeth 3f, 3g and between the teeth 3h, 3i in FIG. 10, and parts before and after the respective slit portions 7s are integrally connected. The right slit portions 7s in FIG. 10 extend from a tooth root side toward a tooth crown side, whereas the left slit portion 7s extends from the tooth crown side toward the tooth root side. In the present invention, the directions of these slit portions are not limited.

The dental mouthpiece 7-3 according to this seventh embodiment can achieve functions and effects similar to those of the dental mouthpieces 7-1, 7-2.

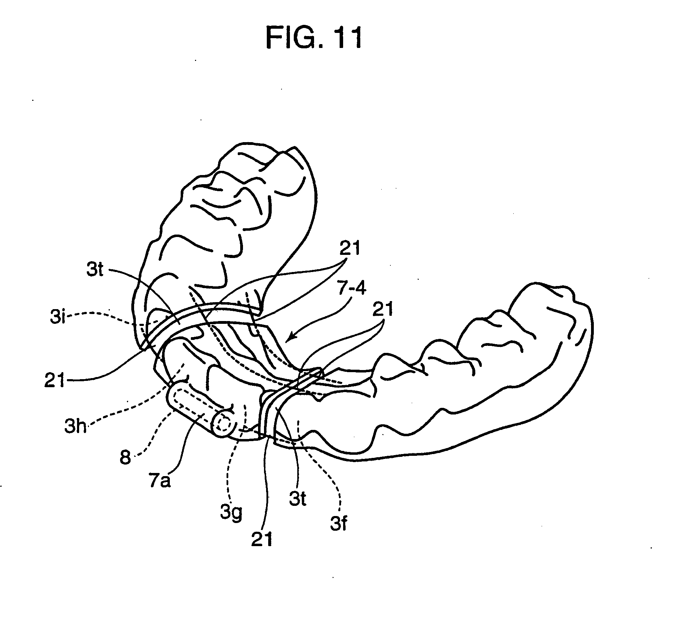

FIG. 11 shows a dental mouthpiece 7-4 according to the eighth embodiment. The dividing portions of this dental mouthpiece 7-4 are cut portions 7t formed by cutting parts except at the one corresponding to the teeth 3g, 3h to be aligned. In FIG. 11, the cut portions 7t are formed by making cuts between the teeth 3f, 3g and between 3h, 3i, and parts before and after the respective cut portions 7t are integrally connected, for example, by means of wires 21 or the like insert-cast in the dental mouthpiece 7-4.

The dental mouthpiece 7-4 according to this eighth embodiment can also achieve functions and effects similar to those of the dental mouthpieces 7-1, 7-2 and 7-3.

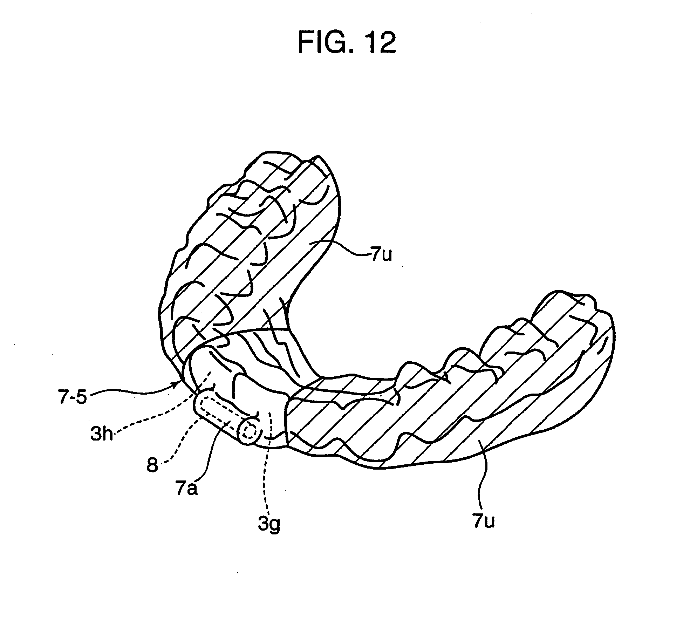

FIG. 12 shows a dental mouthpiece 7-5 according to the ninth embodiment. The dividing portions of this dental mouthpiece 7-5 are soft portions 7u made of a soft material. In this dental mouthpiece 7-5, the part corresponding to the teeth 3g, 3h to be aligned is made of an ordinary mouthpiece material, whereas the other parts (parts hatched with oblique lines in FIG. 12) are made of the soft material less likely to transmit the mechanical vibration to form the soft portions 7u.

The dental mouthpiece 7-5 according to this ninth embodiment can also achieve functions and effects similar to those of the dental mouthpieces 7-1, 7-2, 7-3 and 7-4. Further, the dental mouthpiece 7-5 has an advantage of having no clearances such as the cutout portions 7p and the slit portions 7s.

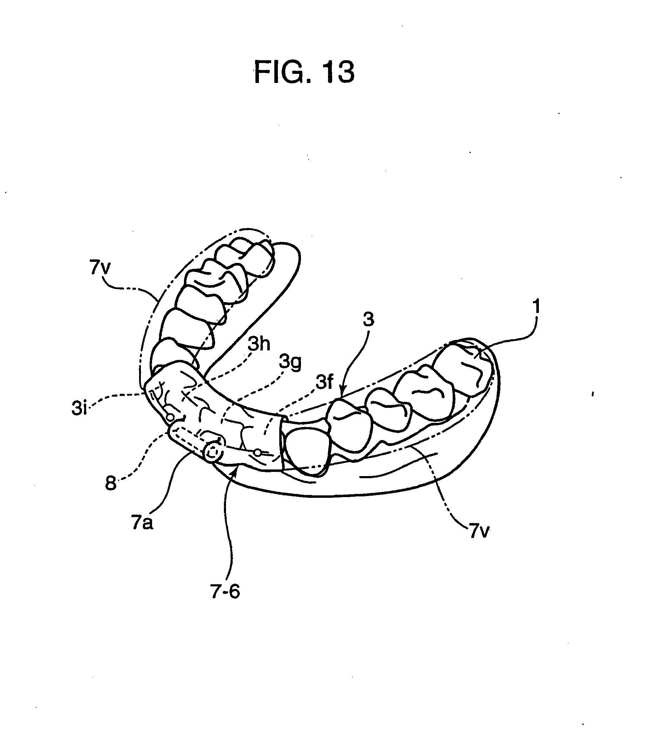

FIG. 13 shows a dental mouthpiece 7-6 according to the tenth embodiment. The dividing portions of this dental mouthpiece 7-6 are cutoff portions 7v shown by chain double-dashed line. These cutoff portions 7v are formed by cutting off parts of the dental mouthpiece 7-4 at least except the one corresponding to the teeth 3g, 3h to be aligned (teeth 3f, 3i near the teeth 3g, 3h to be aligned are also included in FIG. 13). Accordingly, this dental mouthpiece 7-6 is mounted only on the teeth 3g, 3h to be aligned (or on the teeth 3g, 3h to be aligned and their neighboring teeth 3f, 3i).

The dental mouthpiece 7-6 according to this tenth embodiment can also achieve functions and effects similar to those of the dental mouthpieces 7-1, 7-2, 7-3, 7-4 and 7-5.

The dental mouthpiece 7-6 may be mounted on only a single tooth. For example, the dental mouthpiece 7-6 may be so shaped and constructed as to be mounted only on one tooth 3g or 3h to be aligned.

In the case where all the teeth 3a to 3n are to be aligned, the dental mouthpiece 7-6 may be individually mounted on each of the teeth 3a to 3n to be aligned. In such a case, the dental mouthpiece 7-6 can be successively detached from the teeth for which an orthodontic treatment has been finished. Alternatively, the dental mouthpiece 7-6 can be successively mounted and detached. For example, a treatment is first conducted by mounting the dental mouthpiece 7-6 on the tooth at the back side, and the dental mouthpiece 7-6 is detached after the orthodontic treatment is finished. A subsequent treatment is conducted by mounting the dental mouthpiece 7-6 on the tooth before the already treated tooth. In this way, it is also possible to successively mount and detach the dental mouthpiece 7-6 on and from the teeth from the posterior tooth side toward the front tooth side.

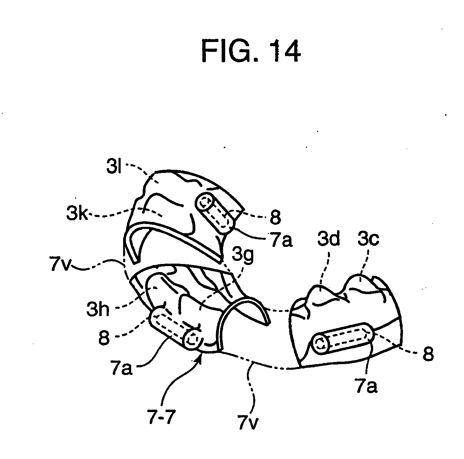

FIG. 14 shows a dental mouthpiece 7-7 according to the eleventh embodiment. The dividing portions of this dental mouthpiece 7-7 are cutoff portions 7v (see chain double-dashed line) formed by cutting off the dental mouthpiece 7-7 except at parts corresponding to the teeth 3c, 3d to be aligned, the teeth 3g, 3h to be aligned and the teeth 3k, 31 to be aligned. Accordingly, the dental mouthpiece 7-7 is mounted only on the teeth 3c, 3d to be aligned, the teeth 3g, 3h to be aligned and the teeth 3k 31 to be aligned.

The dental mouthpiece 7-7 according to this eleventh embodiment can also achieve functions and effects similar to those of the dental mouthpieces 7-1, 7-2, 7-3, 7-4, 7-5 and 7-6.

The dental mouthpiece 7-7 is divided into a plurality of (three in this example) mutually independent segments by the cutoff portions (dividing portions) 7v. In this construction, the direction and intensity of the vibration to be applied can be changed for each segment, which enables adaptations to various teethes and states of bites. Further, one or more vibrating elements can be stored for each segment. If a plurality of vibrating elements are stored, the types (e.g. electric motor and permanent magnet) of the vibrating elements, the directions, intensities and the like of the vibration can be caused to differ from each other.

Since the parts before and after the dividing portions are integrally connected to each other in the dental mouthpieces 7-1 to 7-4 according to the fifth to eighth embodiments, each dental mouthpiece is entirely formed by a single segment, but the parts before and after the dividing portions can be seen as the mutually independent segments since the respective dividing portions suppress the transmission of the mechanical vibration. Accordingly, in a construction in which vibrating elements such as the vibrating actuators 8 are stored in the segments before and after the dividing portions similar to the dental mouthpiece 7-7 according to the eleventh embodiment, the direction and intensity of the vibration to be applied can be changed for each segment, thereby enabling adaptations to various teethes and states of bites. Further, it is also possible to store one or more vibrating elements in each segment.

Since the dividing portions are the cutout portions 7p, the slit portions 7s or the cut portions 7t in the dental mouthpiece 7-1 to 7-4 according to the ninth to eleventh embodiments, the segments unnecessary for the treatment by a treatment plan or the segments having used for the already finished orthodontic treatment can be locally removed by being cut at the dividing portions if the vibrating actuators are stored in the respective segments before and after the dividing portions. It is more preferable to have such a construction that the parts cut at the dividing portions can be reconnected. This construction can be realized, for example, by mounting fittings attachable to and detachable from each other, magnetic elements attracting each other, adhesive materials or the like at the cut positions.

The dental mouthpieces 7-1 to 7-7 according to the above embodiments are not limited to those having an inner and outer overlaid structure comprised of the inner layer 7A and the outer layer 7B. In short, it is sufficient to store the vibrating element at the part corresponding to the tooth to be aligned.

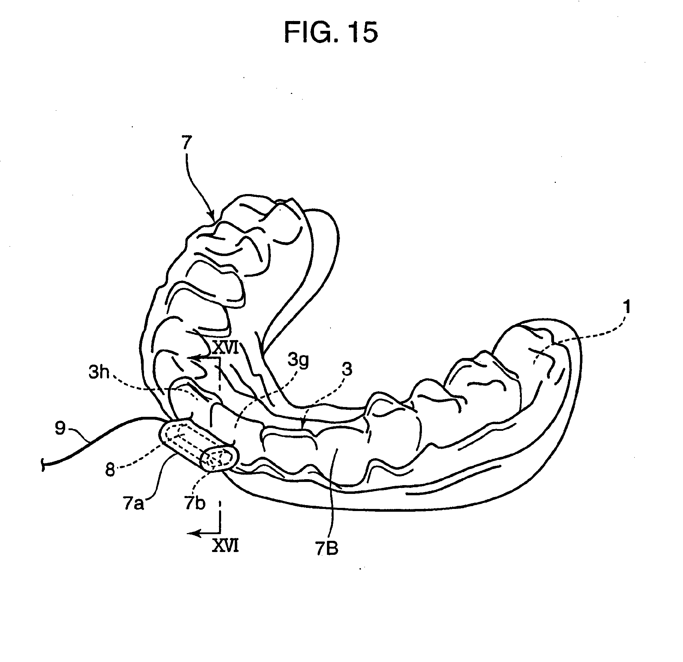

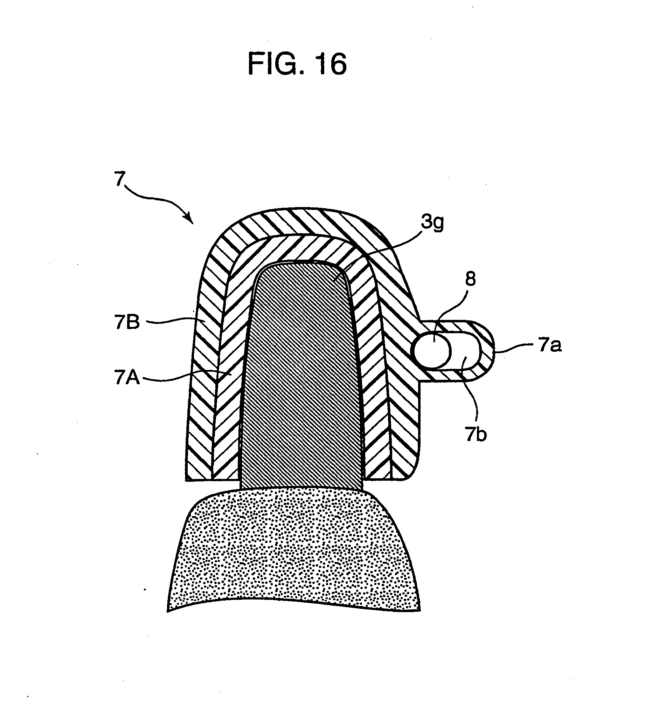

FIG. 15 is a perspective view showing a state where a dental mouthpiece according to a twelfth embodiment of the present invention is mounted on the lower dental arch of a user, and FIG. 16 is a section taken along the line XVI-XVI of FIG. 15.

The dental mouthpiece 7 according to this embodiment is characterized by the shape of a storage space of a vibrating element storing portion. This storage space is so shaped as to provide the vibrating element with a play permitting the vibrating element itself to move in the storage space.

In FIG. 15, an outer layer 7B constituting the dental mouthpiece 7 is formed with a bulge portion 7a similar to the first embodiment, and a vibrating actuator 8 as a vibrating element is stored in this bulge portion 7a. This vibrating actuator 8 has a cylindrical shape and is stored in the bulge portion 7a in such a posture that a direction of the central axis thereof is a horizontal direction (transverse direction) along the teeth group 3.

On the other hand, a storage space 7b defined in the bulge portion 7a, i.e. a space for storing the vibrating actuator 8 has a cylindrical shape whose cross section normal to longitudinal direction has an elliptical shape longer in horizontal direction. Accordingly, the shape of the storage space 7b is larger than the outer shape of the vibrating actuator 8 and provides a clearance or a play extending in horizontal direction (inward and outward directions of the buccal cavity).

The storage space 7a according to this embodiment permits the vibrating actuator 8 to be displaced along horizontal direction (inward and outward directions of the buccal cavity) without completely restraining the vibrating actuator 8, i.e. provides the vibrating actuator 8 with a play. Accordingly, a vibration load generated by the vibrating actuator 8 as the vibrating element causes the vibrating actuator 8 itself to vibrate along the direction of the above clearance (horizontal direction) and to collide with the wall surface defining the storage space 7b. This collision load amplifies vibration to be applied to the teeth group 3 of the user wearing the dental mouthpiece 7, thereby further improving the orthodontic effect by that much.

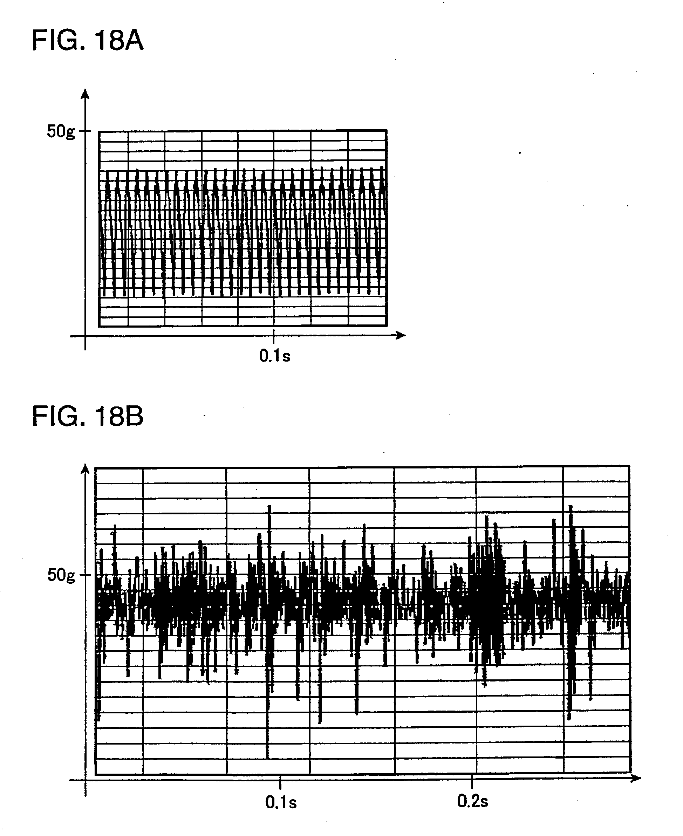

FIGS. 18 are graphs showing an experiment result obtained by the inventors of the present application. FIG. 18A shows the amplitude of vibration to be applied to the teeth 3g, 3h to be aligned from a dental mouthpiece 7 whose storage space 7b has a shape equal to the outer shape of the vibrating actuator 8, i.e. a dental mouthpiece 7 in which the vibrating actuator 8 is completely restrained in the storage space 7b as a reference example, and FIG. 18B shows the amplitude of vibration in the case where a play is provided in the storage space 7b as shown in FIG. 15.

FIG. 18A shows that regular vibration of about 200 Hz is applied with a vibration load of about 30 g by the eccentric weight of the vibrating actuator 8 in the case where the vibrating actuator 8 is completely restrained in the storage space 7b. On the other hand, FIG. 18B shows that vibration is irregular, but the vibration load is increased (doubled) up to about 60 g in the case where there is the play.

In this embodiment, the direction of the play (direction of the clearance) coincides with a direction conforming to the aligning direction of the teeth 3g, 3h to be aligned in the storage space 7b. This largely contributes to the promotion of the orthodontic effect.

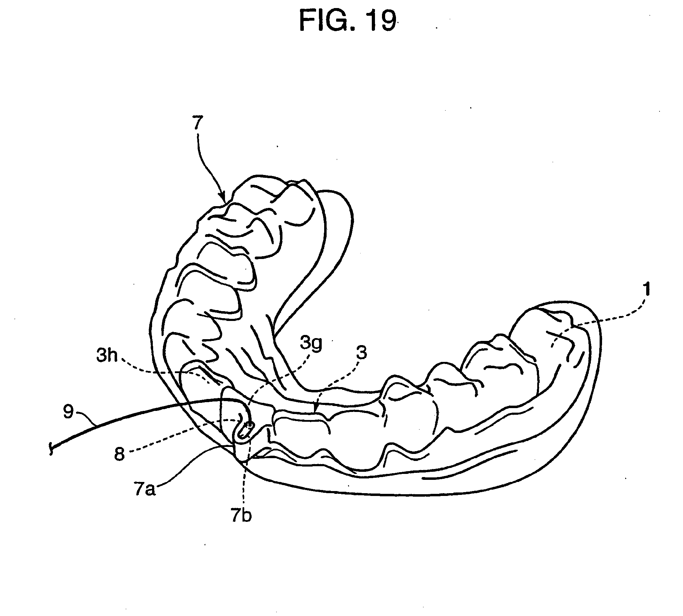

For example, in the case of retracting a tooth sticking out forward and in the case of pulling a retracted tooth forward, the direction of the clearance may coincide with forward and backward directions. Further, in the case of aligning a twisted tooth, the direction of the clearance may coincide with a direction in which the tooth should be twisted back and which is substantially normal to the tooth surface. In an example shown in FIG. 19, the direction of the clearance is set to be substantially normal to the right half of the tooth surface of the tooth 3g to be aligned, which is supposed to be twisted in counterclockwise direction when viewed from above.

A vibration effect utilizing such a clearance enables the application of the vibration load having high directivity to the teeth. For example, even if a vibrating element exemplified by the vibrating actuator 8 and having high directivity cannot be used in light of cost and size and, instead, an inexpensive and small-sized rotary motor or vibration motor has to be used, sufficient stimuli can be given to promote the orthodontic effect by applying a vibration load having high directivity to the tooth to be aligned, and a load that becomes an aligning force can be applied in a specified direction.

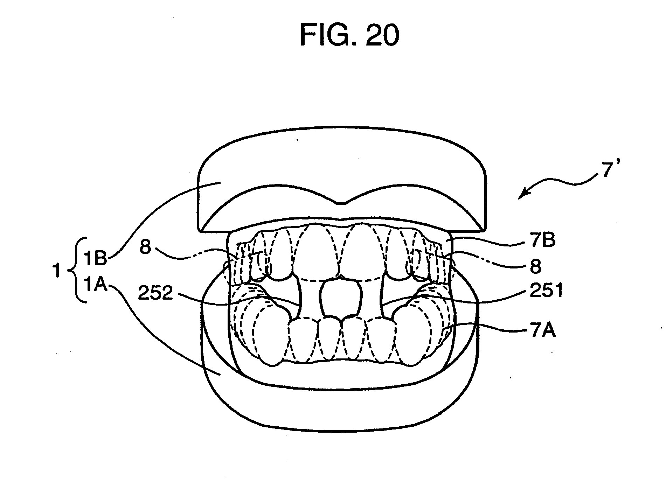

A thirteenth embodiment of the present invention is described with reference to FIG. 20. FIG. 20 is a perspective view showing a state where a dental mouthpiece 7' according to one embodiment of the present invention is mounted on a dental cast 1 of a user. The dental mouthpiece 7' of this embodiment includes a lower layer 71 corresponding to a dental cast 11 of the lower dental arch, an upper layer 72 corresponding to a dental cast 12 of the upper dental arch, connecting members 251, 252 connecting both layers 71, 72 at positions distanced from teeth to be aligned, and vibrating actuators 8 as one example of vibrating elements. The upper layer 71 is mountable on the upper teeth, and the lower layer 72 is mountable on the lower teeth.

The lower layer 71 and the upper layer 72 of this dental mouthpiece 7' are both produced using an apparatus equivalent to the producing apparatus 11 shown in FIG. 3 by a method equivalent to the producing method shown in FIG. 4. Thereafter, the connecting members 251, 252 are formed in the following manner.

First, the lower layer 71 and the upper layer 72 produced as above are mounted on corresponding dental casts 1A, 1B of the dental cast 1 having the bite thereof adjusted. Subsequently, EVA columns having the opposite ends thereof heated to be molten are caused to stand at specified positions of the lower layer 71 with both dental casts 1A, 1B opened, and then the dental casts 1A, 1B are closed up to a specified angle. In this way, the ends of the EVA columns at an opposite side come into contact with the upper layer 72. The EVA columns become the connecting members 251, 252 connecting both layers 71, 72 by being cooled in this state, whereby a pair of upper and lower dental mouthpiece 7' is completed.

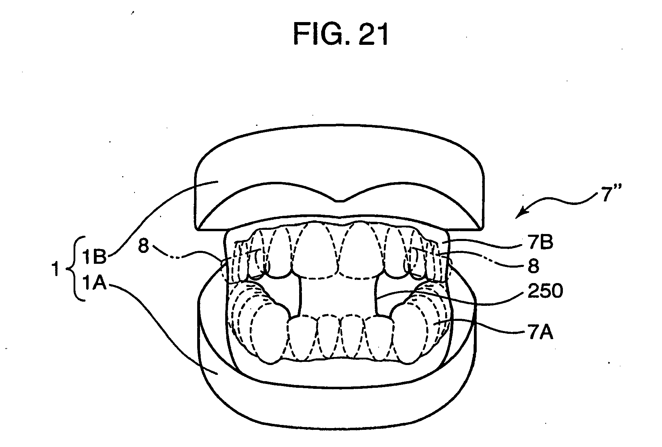

The connecting members 251, 252 are provided at the positions distanced from the teeth to be aligned between the upper and lower layers 72, 71. For example, if the teeth to be aligned are left and right molar teeth (e.g. teeth 3a to 3d and 3k to 3n in the teeth shown in FIG. 1) and vibrating elements such as the vibrating actuators 8 are built in the dental mouthpiece 7' at positions near these teeth as shown in FIG. 20, the connecting members 251, 252 may be formed at the positions near the front teeth (central incisors) 3g, 3h as shown in FIG. 20. Alternatively, only a single connecting member 250 may be formed as in a dental mouthpiece 7" shown as a fourteenth embodiment in FIG. 21. On the other hand, if the teeth to be aligned are front teeth (lateral incisors) 3f, 3i and front teeth (canine teeth) 3e, 3j shown in FIG. 1 and the vibrating actuator 8 is built in at the position shown in FIG. 2, the connecting members may be formed at the left and right posterior teeth or their neighboring positions (e.g. at positions of the teeth 3c, 3d and teeth 3k, 31 of FIG. 1 or at their neighboring positions).

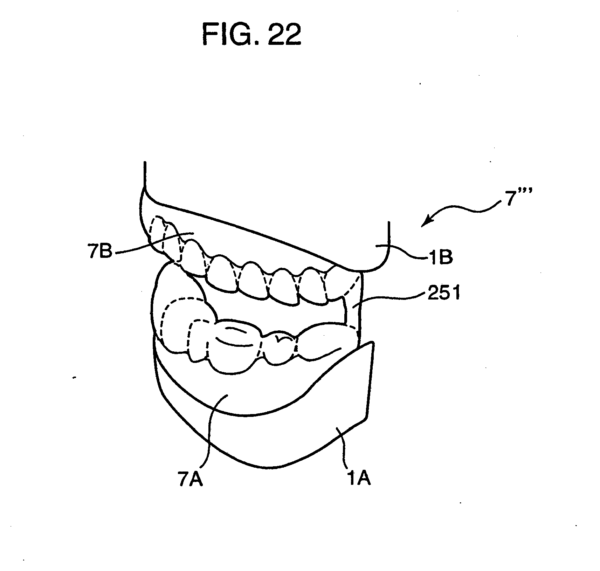

In a dental mouthpiece 7"' shown as a fifteenth embodiment in FIG. 22, the left and right connecting members (only left connecting member 251 is shown in FIG. 22) are provided at positions more toward the posterior teeth than the molar teeth. The connecting members provided at such positions enable no load caused by the bite to be applied to any of the front teeth (central incisors) 3g, 3h, the front teeth (lateral incisors) 3f, 3i, the front teeth (canine teeth) 3e, 3j and the molar teeth 3a to 3d, 3k to 3n as shown in FIG. 1. In other words, the open state can be kept. Such a dental mouthpiece is suitable in the case of aligning the entire teeth.

In the dental mouthpieces including the respective connecting members, the biting state (bite force and biting surfaces) of the upper layer 72 and the lower layer 71 can be kept constant at the position(s) where the vibrating element such as the vibrating actuator 8 is provided. This prevents a change in the vibration transmission mode caused by an unconscious behavior of the user to bite the vibrating actuator 8 or its neighboring part. In other words, this eliminates the need for the user to make an effort to keep the dental mouthpiece open, whereby a good orthodontic effect can be obtained by continuing to apply specified vibration to the teeth to be aligned while reducing burdens on the user.

As described above, the present invention is directed to an orthodontic appliance for aligning teeth including a tooth to be aligned, comprising a dental mouthpiece mountable on the teeth and shaped to apply a biasing force in an aligning direction to the tooth to be aligned in a mounted state; and a vibrating element attachable to the dental mouthpiece and adapted to generate mechanical vibration and apply the vibration to the tooth to be aligned. The dental mouthpiece applies a suitable aligning force, i.e. a static biasing force in the aligning direction to the tooth to be aligned in the teeth by the shape of its own. In addition, the vibrating element attached to the dental mouthpiece applies the vibration to the tooth to be aligned, thereby promoting the alignment of the teeth by the aligning force and shortening a period of orthodontic treatment. Accordingly, this appliance can promote an orthodontic effect only by the mounting of the dental mouthpiece and the operation of the vibrating element attached to the dental mouthpiece and can shorten the treatment period without using braces including an orthodontic wire and brackets.

The dental mouthpiece has an inner surface form corresponding to the alignment of teeth as a final target or a target in the course of the orthodontic treatment. Alternatively, a projection for applying a pressing force in an aligning direction to the tooth to be aligned in the teeth with the dental mouthpiece mounted on the teeth may be formed on an inner side surface of the dental mouthpiece.

It is more preferable to attach the vibrating element to a part of the dental mouthpiece corresponding to the tooth to be aligned. The vibrating element attached at this part more remarkably promotes the orthodontic effect by the dental mouthpiece.

The material of the dental mouthpiece is not particularly limited. However, there are various advantages if the dental mouthpiece is made of such a soft material as to permit the dental mouthpiece to be sufficiently deformed so that the dental mouthpiece is mountable on the teeth (specifically, material having a shore hardness of about 80 to 90; e.g. EVA, i.e. ethylene vinyl acetate). The use of a soft material as described above provides softness to the dental mouthpiece in addition to an electrical insulating property and a heat insulating property. This provision of softness enables the dental mouthpiece to alleviate high-speed components of the mechanical vibration transmitted from the vibrating element to the tooth to be aligned, whereby a damage of the tooth to be aligned can be prevented.

Further, it is more preferable that the dental mouthpiece includes a dividing portion at a part thereof except the one corresponding to the tooth to be aligned; and that this dividing portion suppresses the transmission of the mechanical vibration generated by the vibrating element so that the mechanical vibration acts restrictedly on the part including the tooth to be aligned.

This construction enables the vibration to be restrictedly applied to the tooth to be aligned.

The dental mouthpiece including the dividing portion preferably has, for example, any one of the following constructions in order to facilitate the production thereof.
a) The dividing portion of the dental mouthpiece is a cutout portion formed by cutting out either a tooth root portion or a tooth crown portion of the dental mouthpiece except at the tooth to be aligned, and the other part integrally connects parts of the dental mouthpiece before and after the cutout portion.
b) The dividing portion of the dental mouthpiece is a slit portion formed in a part of the dental mouthpiece except at the tooth to be aligned, and parts of the dental mouthpiece before and after this slit portion are connected to each other.
c) The dividing portion of the dental mouthpiece is a cut portion formed by cutting a part of the dental mouthpiece except at the tooth to be aligned, and parts of the dental mouthpiece before and after this cut portion are connected via a member separate from the one forming the cut portion.
d) The dividing portion of the dental mouthpiece is a cutoff portion formed by cutting off a part of the dental mouthpiece except at the tooth to be aligned, and this cutoff portion is formed at such a position that the dental mouthpiece is so shaped as to be mounted only on the tooth to be aligned.
e) The dividing portion of the dental mouthpiece is a cutout portion formed by cutting out, for example, either a tooth root portion or a tooth crown portion of the dental mouthpiece except at the tooth to be aligned, and parts of the dental mouthpiece before and after the cutout portion are integrally connected by the remaining part of the dental mouthpiece.

## Claims

1. An orthodontic appliance for aligning teeth including a tooth (3) to be aligned, comprising
a dental mouthpiece (7) mountable on the teeth (3) and shaped to apply a static biasing force in an aligning direction to the tooth (3) to be aligned in a mounted state; wherein the dental mouthpiece (7) has an inner surface form corresponding to the alignment of teeth as a final target or a target in the course of an orthodontic treatment; and
a vibrating element (8) attachable to the dental mouthpiece (7), the vibrating element being a motor adapted to generate mechanical vibration in the dental mouthpiece and apply the vibration to the tooth (3) to be aligned.

2. An orthodontic appliance according to claim 1, wherein a projection for applying a pressing force in the aligning direction to the tooth (3) to be aligned in the teeth with the dental mouthpiece (7) mounted on the teeth is formed on an inner side surface of the dental mouthpiece (7).

3. An orthodontic appliance according to any one of claims 1 or 2, wherein the vibrating element(8) is attached to a part of the dental mouthpiece (7) corresponding to the tooth (3) to be aligned.

4. An orthodontic appliance according to claim 1, wherein the dental mouthpiece (7) is made of a soft material having a shore hardness from 80 to 90.

5. An orthodontic appliance according to claim 1, wherein the dental mouthpiece includes a dividing portion at a part thereof except the one corresponding to the tooth to be aligned; such that the dividing portion suppresses the transmission of the mechanical vibration generated by the vibrating element so that the mechanical vibration acts restrictedly on the part including the tooth to be aligned.

6. An orthodontic appliance according to claim 5, wherein the dividing portion (7t, 7p, 7s, 7v) of the dental mouthpiece (7) is a cutout portion (7p) formed by cutting out a tooth root portion (7p) of the dental mouthpiece (7) except at the tooth (3) to be aligned, wherein a tooth crown portion (7r) integrally connects parts of the dental mouthpiece (7) before and after the cutout portion (7p).

7. An orthodontic appliance according to claim 5, wherein the dividing portion (7t, 7p, 7s, 7v) of the dental mouthpiece (7) is a cutout portion (7p) formed by cutting out a tooth crown portion (7r) of the dental mouthpiece (7) except at the tooth (3) to be aligned, wherein a tooth root portion (7q) integrally connects parts of the dental mouthpiece (7) before and after the cutout portion (7p).

8. An orthodontic appliance according to claim 5, wherein the dividing portion (7t, 7p, 7s, 7v) of the dental mouthpiece (7) is a slit portion (7s) formed in a part of the dental mouthpiece (7) except at the tooth (3) to be aligned; and parts of the dental mouthpiece (7) before and after the slit portion (7s) are connected to each other.

9. An orthodontic appliance according to claim 5, wherein the dividing portion (7t, 7p, 7s, 7v) of the dental mouthpiece (7) is a cut portion (7t) formed by cutting a part of the dental mouthpiece (7) except at the tooth (3) to be aligned, and parts of the dental mouthpiece (7) before and after this cut portion (7t) are connected via a member separate from the one forming the cut portion (7t).

10. An orthodontic appliance according to claim 5, wherein the dividing portion (7t, 7p, 7s, 7v) of the dental mouthpiece (7) is a cutoff portion (7v) formed by cutting off a part of the dental mouthpiece (7) except at the tooth (3) to be aligned, and the cutoff portion (7v) is formed at such a position that the dental mouthpiece (7) is so shaped as to be mounted only on the tooth (3) to be aligned.

## Patentansprüche

1. Ein kieferorthopädisches Behandlungsgerät zum Ausrichten von Zähnen, die einen auszurichtenden Zahn (3) einschließen, das Folgendes umfasst:
ein dentales Mundstück (7), das an den Zähnen (3) montierbar ist und geformt ist, um im montierten Zustand auf den auszurichtenden Zahn (3) eine statische vorspannende Kraft in eine ausrichtende Richtung anzuwenden; wobei das dentale Mundstück (7) eine innere Oberflächenform aufweist, die der Zahnausrichtung als endgültiges Ziel oder als Ziel im Verlauf der kieferorthopädischen Behandlung entspricht; und
ein vibrierendes Element (8), das an das dentale Mundstück (7) anbringbar ist, wobei das vibrierende Element ein Motor ist, der dazu angepasst ist, eine mechanische Vibration im dentalen Mundstück zu erzeugen, und die Vibration auf den auszurichtenden Zahn (3) anzuwenden.

2. Ein kieferorthopädisches Behandlungsgerät nach Anspruch 1, wobei ein Vorsprung an einer Innenseitenfläche des dentalen Mundstücks (7) gebildet wird, zur Anwendung einer Presskraft in Ausrichtungsrichtung auf den in den Zähnen auszurichtenden Zahn (3), bei an den Zähnen montiertem dentalen Mundstück (7).

3. Ein kieferorthopädisches Behandlungsgerät nach einem der Ansprüche 1 oder 2, wobei das vibrierende Element (8) auf ein Teil des dentalen Mundstücks (7) angebracht ist, der dem auszurichtenden Zahn (3) entspricht.

4. Ein kieferorthopädisches Behandlungsgerät nach Anspruch 1, wobei das dentale Mundstück (7) aus einem weichen Material hergestellt wird, das eine Shore-Härte von 80 bis 90 aufweist.

5. Ein kieferorthopädisches Behandlungsgerät nach Anspruch 1, wobei das dentale Mundstück einen trennenden Abschnitt beinhaltet in einem Bereich hiervon, ausschließlich desjenigen, der dem auszurichtenden Zahn entspricht; derart, dass der trennende Abschnitt die Übertragung der mechanischen Vibration, die vom vibrierenden Element erzeugt wird, unterdrückt, sodass die mechanische Vibration eingeschränkt auf den Bereich agiert, die den auszurichtenden Zahn beinhaltet.

6. Ein kieferorthopädisches Behandlungsgerät nach Anspruch 5, wobei der trennende Abschnitt (7t, 7p, 7s, 7v) des dentalen Mundstücks (7) ein Aussparungsausschnitt *(cutout portion)* (7p) ist, der gebildet wird, indem ein Zahnwurzelbereich (7p) des dentalen Mundstücks (7), ausgenommen beim auszurichtenden Zahn (3), ausgeschnitten wird, wobei ein Zahnkronenbereich (7r) Teile des dentalen Mundstücks (7) vor und nach dem Aussparungsausschnitt (7p) einstückig verbindet.

7. Ein kieferorthopädisches Behandlungsgerät nach Anspruch 5, wobei der trennende Abschnitt (7t, 7p, 7s, 7v) des dentalen Mundstücks (7) ein Aussparungsausschnitt (7p) ist, der gebildet wird, indem ein Zahnkronenbereich (7r) des dentalen Mundstücks (7), ausgenommen beim auszurichtenden Zahn (3), ausgeschnitten wird, wobei ein Zahnwurzelbereich (7q) Teile des dentalen Mundstücks (7) vor und nach dem Aussparungsausschnitt (7p) einstückig verbindet.

8. Ein kieferorthopädisches Behandlungsgerät nach Anspruch 5, wobei der trennende Abschnitt (7t, 7p, 7s, 7v) des dentalen Mundstücks (7) ein geschlitzter Abschnitt (*slit portion*) (7s) ist, der in einem Teil des dentalen Mundstücks (7) gebildet wird, ausgenommen beim auszurichtenden Zahn (3); und wobei Teile des dentalen Mundstücks (7) vor und nach dem geschlitzten Abschnitt (7s) miteinander verbunden sind.

9. Ein kieferorthopädisches Behandlungsgerät nach Anspruch 5, wobei der trennende Abschnitt (7t, 7p, 7s, 7v) des dentalen Mundstücks (7) ein geschnittener Abschnitt *(cut portion)* (7t) ist, der gebildet wird, indem ein Teil des dentalen Mundstücks (7) geschnitten wird, ausgenommen beim auszurichtenden Zahn (3); und wobei Teile des dentalen Mundstücks (7) vor und nach diesem geschnittenen Abschnitt (7t) mittels eines Elements miteinander verbunden sind, das von demjenigen gesondert ist, das den geschnittenen Abschnitt (7t) bildet.

10. Ein kieferorthopädisches Behandlungsgerät nach Anspruch 5, wobei der trennende Abschnitt (7t, 7p, 7s, 7v) des dentalen Mundstücks (7) ein abgeschnittener Abschnitt *(cutoff portion)* (7v) ist, der gebildet wird, indem ein Teil des dentalen Mundstücks (7), ausgenommen beim auszurichtenden Zahn (3), ausgeschnitten wird, und wobei der abgeschnittene Bereich (7v) in einem solchen Bereich gebildet wird, dass das dentale Mundstück (7) derart geformt wird, dass es ausschließlich auf dem auszurichtenden Zahn (3) montiert wird.

## Revendications

1. Un appareil orthodontique pour l'alignement de dents incluant une dent (3) à aligner, comprenant
une pièce buccale dentaire (7) pouvant être montée sur les dents (3) et formée de manière à appliquer, dans un état monté, une force statique de précontrainte à la dent (3) à aligner dans une direction d'alignement ; sachant que la pièce buccale dentaire (7) présente une forme de surface intérieure qui correspond à l'alignement des dents en tant qu'objectif final ou en tant qu'objectif dans le cadre d'un traitement orthodontique ; et
un élément vibrant (8) pouvant être attaché à la pièce buccale dentaire (7), l'élément vibrant étant un moteur adapté de manière à générer une vibration mécanique dans la pièce buccale dentaire et de manière à appliquer la vibration à la dent (3) à aligner.

2. Un appareil orthodontique d'après la revendication 1, sachant qu'une saillie pour appliquer à la dent (3) à aligner une force de pressage dans la direction d'alignement parmi les dents, la pièce buccale dentaire (7) étant montée sur les dents, est formée sur une surface intérieure de la pièce buccale dentaire (7).

3. Un appareil orthodontique d'après une des revendications 1 ou 2, sachant que l'élément vibrant (8) est attaché à une partie de la pièce buccale dentaire (7) qui correspond à la dent (3) qui doit être alignée.

4. Un appareil orthodontique d'après la revendication 1, sachant que la pièce buccale dentaire (7) est réalisée en un matériau souple présentant une dureté Shore de 80 à 90.

5. Un appareil orthodontique d'après la revendication 1, sachant que la pièce buccale dentaire contient une portion séparatrice dans une partie de celle-ci à l'exception de celle correspondant à la dent qui doit être alignée ; de sorte que la portion séparatrice supprime la transmission de la vibration mécanique générée par l'élément vibrant, de manière que la vibration mécanique n'agit que de façon limitée à la partie incluant la dent qui doit être alignée.

6. Un appareil orthodontique d'après la revendication 5, sachant que la portion séparatrice (7t, 7p, 7s, 7v) de la pièce buccale dentaire (7) est une partie découpée (*cutout portion*) (7p) formée en découpant une portion racine des dents (7p) de la pièce buccale dentaire (7) à l'exception du domaine de la dent (3) qui doit être alignée, sachant qu'une portion couronne dentaire (7r) raccorde d'une seule pièce les parties de la pièce buccale dentaire (7) avant et après la portion découpée (7p).

7. Un appareil orthodontique d'après la revendication 5, sachant que la portion séparatrice (7t, 7p, 7s, 7v) de la pièce buccale dentaire (7) est une partie découpée (7p) formée en découpant une portion couronne dentaire (7r) de la pièce buccale dentaire (7) à l'exception du domaine de la dent (3) qui doit être alignée, sachant qu'une portion racine des dents (7q) raccorde d'une seule pièce les parties de la pièce buccale dentaire (7) avant et après la portion découpée (7p).

8. Un appareil orthodontique d'après la revendication 5, sachant que la portion séparatrice (7t, 7p, 7s, 7v) de la pièce buccale dentaire (7) est une portion en fente (*slit portion*) (7s) formée dans une partie de la pièce buccale dentaire (7) à l'exception du domaine de la dent (3) qui doit être alignée ; et que des parties de la pièce buccale dentaire (7) avant et après la portion en fente (7s) sont raccordées entre elles.

9. Un appareil orthodontique d'après la revendication 5, sachant que la portion séparatrice (7t, 7p, 7s, 7v) de la pièce buccale dentaire (7) est une portion coupée (*cut portion*) (7t) formée en coupant une partie de la pièce buccale dentaire (7) à l'exception du domaine de la dent (3) qui doit être alignée ; et que des parties de la pièce buccale dentaire (7) avant et après cette portion coupée (7t) sont raccordées au moyen d'un élément distinct de celui qui forme la portion coupée (7t).

10. Un appareil orthodontique d'après la revendication 5, sachant que la portion séparatrice (7t, 7p, 7s, 7v) de la pièce buccale dentaire (7) est une portion de troncature (7v) (*cutoff portion*) formée en tranchant une partie de la pièce buccale dentaire (7) à l'exception du domaine de la dent (3) qui doit être alignée ; et que la portion de troncature (7v) est formée à une telle position, que la pièce buccale dentaire (7) est formée de telle façon, qu'elle est montée uniquement sur la dent (3) qui doit être alignée.
